# FASCICULE DE BREVET EUROPEEN

(11) **EP 2 103 464 B1**
(45) Date de publication et mention de la délivrance du brevet: **18.01.2012**
(21) Numéro de dépôt: 09153163.2
(22) Date de dépôt: 19.02.2009
(51) Int. Cl.: B60J 1/17, B60J 5/04

(54) **Ensemble de guidage de vitre amélioré pour portière de véhicule automobile**
Verbessertes Führungssystem für die Scheibe einer Kraftfahrzeugtür
Improved window guiding unit for an automobile door

(30) Priorité: 18.03.2008 FR 0851739
(43) Date de publication de la demande: 23.09.2009
(73) Titulaire: PEUGEOT CITROËN AUTOMOBILES S.A., 78140 Vélizy Villacoublay (FR)
(72) Inventeur: Finot, Emmanuel, 92360 Meudon la Forêt (FR)

(56) Documents cités:
- EP-A- 0 432 590
- WO-A-2004/108454
- DE-A1- 3 235 026
- DE-A1- 10 149 106
- US-B1- 6 305 125

## Description

L'invention concerne un ensemble de guidage de vitre pour une portière de véhicule automobile, ainsi que son procédé de montage.

Un ensemble de guidage de vitre est destiné à équiper une portière d'un véhicule automobile pour guider le mouvement d'une vitre pouvant être déplacée, selon une direction principale sensiblement verticale, entre une position basse d'ouverture d'une fenêtre de la portière et une position haute de fermeture de la fenêtre. En position basse, la vitre est logée, partiellement ou totalement, à l'intérieur de la partie inférieure de la portière.

On connaît un ensemble de guidage de vitre du type comportant : un cadre coulisse comportant une première rainure et destiné à être fixé à une paroi de doublure de la portière, au voisinage d'au moins un bord latéral de la fenêtre, de sorte que la première rainure soit disposée parallèlement à la direction principale ; un guide coulisse comportant une seconde rainure et destiné à être fixé sur la paroi de doublure, de sorte qu'en position montée du cadre coulisse et du guide coulisse sur la paroi de doublure, la seconde rainure soit disposée parallèlement à la direction principale, en dessous et dans le prolongement de la première rainure du cadre coulisse ; et, une coulisse, chaussée dans lesdites première et seconde rainures et définissant une piste de guidage d'un rebord latéral de la vitre.

US 6305/25 décrit le préambule de la revendication 1. Selon l'art antérieur, le guide coulisse est indépendant du cadre coulisse et est fixé sur la paroi de doublure de la portière par au moins deux points de fixation, en utilisant des moyens de fixation par exemple du type vis - écrou.

Le guide coulisse permet de prolonger le guidage de la vitre dans la partie inférieure de la portière en dessous de la fenêtre. En particulier, alors que la vitre se trouve dans sa position basse, le bord latéral de la vitre reste engagé dans une portion d'extrémité de la coulisse logée dans la seconde rainure.

Cette longueur sur laquelle le rebord d'une vitre en position basse reste engagé dans la coulisse est dite longueur de guidage minimum. La valeur de la longueur de guidage minimum est choisie de manière à ne pas être trop faible pour assurer un bon maintien de la vitre, mais sans pour autant être trop importante pour ne pas gêner le montage de la vitre à l'intérieur de l'ensemble de guidage de vitre.

La chaîne de cotes conduisant de l'axe de la première rainure à celui de la seconde rainure passe par la position du cadre coulisse sur la paroi de doublure, la géométrie de la paroi de doublure, la position des deux moyens de fixation du guide coulisse sur la paroi de doublure et la position de la seconde rainure par rapport à ces moyens de fixation. Cette chaîne de cotes introduit un jeu multidimensionnel se traduisant par un possible défaut d'alignement des première et seconde rainures entre elles. Ce défaut d'alignement conduit par exemple à l'existence d'une distance et/ou d'un angle entre les axes des première et seconde rainures au niveau de l'intervalle les séparant.

Or, la présence d'un tel défaut d'alignement entre les première et seconde rainures perturbe le glissement correct de la vitre le long de la coulisse. En effet, la coulisse chaussée dans les première et seconde rainures est déformée au niveau de l'intervalle séparant les première et seconde rainures désalignées. La coulisse déformée applique alors des forces de frottement additionnelles sur la vitre. Ces forces additionnelles gênent le glissement uniforme de la vitre et peuvent éventuellement bloquer celle-ci en position.

Une force supplémentaire doit alors être appliquée par des moyens de déplacement de vitre, passifs ou actifs, pour vaincre ces forces de frottements additionnelles et poursuivre le déplacement de la vitre.

De nos jours, les moyens de déplacement de vitre sont souvent équipés d'un dispositif anti-pincement qui arrête le déplacement de la vitre et/ou change le sens de déplacement de la vitre dès qu'il détecte une résistance importante s'opposant à la montée de la vitre. Initialement prévu pour éviter de coincer malencontreusement les doigts d'une personne lors de la fermeture de la vitre, ce dispositif anti-pincement peut être déclenché de manière intempestive par un mauvais alignement des rainures du cadre coulisse et du guide coulisse. Cela rend alors impossible la poursuite de la montée de la vitre, même si, en fait, il n'y a aucune raison valable d'interrompre cette montée.

L'invention a donc pour but de palier les problèmes précités en proposant un ensemble de guidage de vitre amélioré garantissant un bon alignement des première et seconde rainures, tout en étant d'un montage aisé.

Pour cela l'invention porte sur un ensemble de guidage de vitre du type précité caractérisé en ce que le guide coulisse est muni de moyens de liaison et le cadre coulisse est muni de moyens de liaison conjugués, les moyens de liaison et les moyens de liaison conjugués coopérant entre eux pour emboîter le guide coulisse et le cadre coulisse dans une position relative qui est prédéterminée, au moins dans un plan de jonction transverse à la direction principale, de manière à garantir l'alignement des première et seconde rainures entre elles.

Suivant des modes particuliers de l'invention, l'ensemble de guidage de vitre comporte une ou plusieurs des caractéristiques suivantes, prise(s) isolément ou suivant toutes les combinaisons techniquement possibles :
- l'une des deux portions d'extrémité du guide coulisse selon la direction principale porte lesdits moyens de liaison, et en ce que l'autre portion d'extrémité du guide coulisse forme une jambe de fixation du guide coulisse sur la paroi de doublure.
- les moyens de liaison et de liaison conjugués permettent un emboîtement du cadre coulisse et du guide coulisse par déplacement du guide coulisse vers le cadre coulisse selon la direction principale.
- le cadre coulisse est un profilé en « U » qui comporte une âme reliant des première et une seconde rives, et dont une portion d'extrémité arrière définit intérieurement la première rainure, les moyens de liaison conjugués du cadre coulisse comportent une patte fixée sur l'âme, les moyens de liaison du guide coulisse comportent une paroi de liaison située dans le prolongement, selon la direction principale et vers le cadre coulisse, d'une paroi de fond de la seconde rainure, la paroi de liaison étant dimensionnée pour venir s'insérer dans un intervalle défini entre la patte et l'âme du cadre coulisse, de manière à contraindre le cadre coulisse selon une première direction dans le plan de jonction.
- la paroi de liaison du guide coulisse comporte des premier et second rebords latéraux faisant, dans le plan de jonction, saillie hors de la paroi de liaison selon ladite première direction, les premier et second rebords étant espacés l'un de l'autre de manière à contraindre le cadre coulisse selon une seconde direction dans le plan de jonction, la seconde direction étant orthogonale à la première direction.
- le premier rebord de la paroi de liaison du guide coulisse fait, dans le plan de jonction, saillie selon un premier sens de la première direction et définie une surface d'appui de la première rive du cadre coulisse, et le second rebord de la paroi de liaison du guide coulisse fait, dans le plan de jonction, saillie dans un second sens de la première direction, opposé au premier sens, et définie une surface d'appui d'un chant de la patte du cadre coulisse
- au moins l'un parmi le cadre coulisse et le guide coulisse est muni de moyens d'aide à l'emboîtement.
- les moyens d'aide à l'emboîtement selon la première direction comportent au moins une face inclinée ménagée sur la paroi de liaison et se raccordant à une surface d'appui arrière.
- les moyens d'aide à l'emboîtement selon la seconde direction comportent une première face inclinée portée par le premier rebord et se raccordant à la première surface d'appui, et une seconde face inclinée portée par le second rebord et se raccordant à la seconde surface d'appui.
- le guide coulisse est muni d'une rigole située dans le prolongement de la seconde rainure et en dessous de celle-ci, pour permettre d'évacuer de l'eau ruisselant de la coulisse vers un point bas P de la portière.

L'invention porte également sur une portière de véhicule automobile caractérisée en ce qu'elle comporte un ensemble de guidage de vitre tel que celui présenté ci-dessus.

Enfin, l'invention porte sur un procédé de montage d'un ensemble de guidage de vitre, tel que celui présenté ci-dessus, sur une paroi de doublure d'une portière d'un véhicule automobile pour guider le mouvement, selon une direction principale D sensiblement verticale, d'une vitre apte à être déplacée entre une position basse d'ouverture d'une fenêtre de la portière et une position haute de fermeture de la fenêtre, caractérisé en ce qu'il comporte les étapes consistant à :
- fixer un cadre coulisse comportant une première rainure sur une paroi de doublure de la portière, au voisinage d'au moins un bord latéral d'une fenêtre de la portière, de sorte que la première rainure soit disposée parallèlement à la direction principale ;
- approcher du cadre coulisse un guide coulisse comportant une seconde rainure de manière à placer la seconde rainure parallèle à la direction principale, en dessous de la première rainure le long de la direction principale ;
- déplacer le guide coulisse le long de la direction principale pour emboîter des moyens de liaison disposés sur la guide coulisse et des moyens de liaison conjugués disposés sur le cadre coulisse, et placer le guide coulisse et le cadre coulisse dans une position relative prédéterminée au moins dans un plan de jonction transverse à la direction principale ;
- fixer le guide coulisse à la paroi de doublure ;
- chausser une coulisse dans les première et seconde rainures ; et,
- monter une vitre dans ladite coulisse.

L'invention et ses avantages seront mieux compris à la lecture de la description qui va suivre, donnée uniquement à titre d'exemple, et faite en se référant aux dessins annexés, dans lesquels :
- la figure 1 est une vue de côté d'une portière équipée d'un ensemble de guidage de vitre selon l'invention, une paroi extérieure de la portière ayant été ôtée pour des raisons de clarté ;
- la figure 2 est une vue partielle en perspective de l'ensemble de guidage de vitre, au voisinage de la jonction entre le cadre coulisse et le guide coulisse de l'ensemble de guidage de vitre de la figure 1, la coulisse ayant été omise pour plus de clarté ;
- la figure 3 est une section selon un plan de jonction correspondant à la ligne III-III de la figure 2 ; et,
- les figures 4 et 5 sont des vues en perspective partielle représentant deux étapes successives de l'emboîtement du guide coulisse et du cadre coulisse de l'ensemble de guidage de vitre de la figure 1.

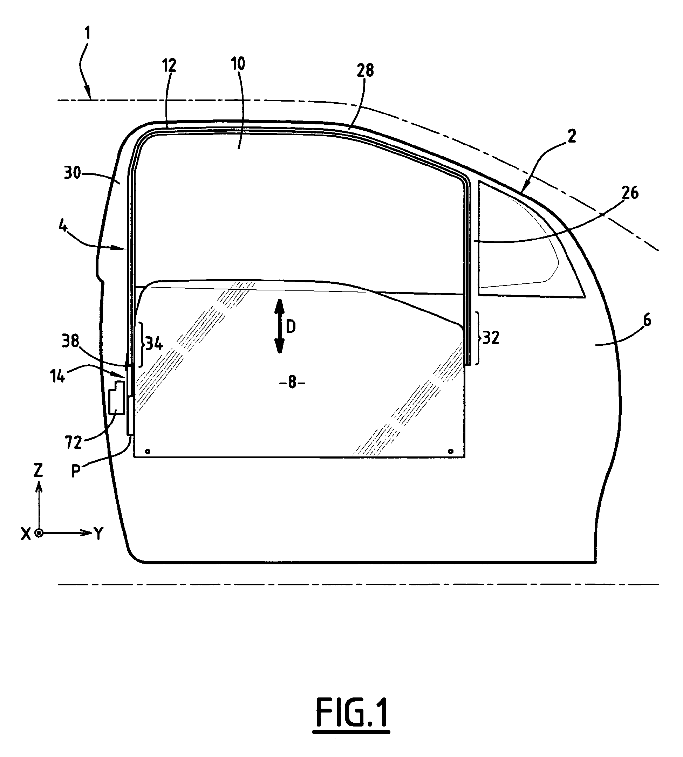

La figure 1 illustre une portière avant droite 2 en position montée sur un véhicule automobile 1. En se déplaçant selon une direction transversale X, depuis l'intérieur vers l'extérieur du véhicule automobile 1, la portière 2 comporte une paroi de garniture, une paroi de doublure 6 et une paroi extérieure. La paroi extérieure de la portière 2 a été omise sur la figure 1 pour rendre visible une face orientée vers l'extérieure de la paroi de doublure 6.

La portière 2 présente, dans sa partie supérieure, une fenêtre 10. Une vitre 8 équipant la portière 2 est disposée entre la paroi de doublure 6 et la paroi extérieure (non représentée) de la portière 2.

La vitre 8 est mobile en translation selon une direction principale D sensiblement verticale, entre une position haute, de fermeture de la fenêtre 10, et une position basse, d'ouverture de la fenêtre 10. Sur la figure 1, la vitre 8 est représentée en position basse. La vitre 8 est déplacée par actionnement de moyens de déplacement de vitre de tout type connu qui ne sont pas représentés sur les dessins.

Un ensemble de guidage de vitre 4 selon l'invention est monté sur la face extérieure de la paroi de doublure 6. Il a entre autre pour fonction de guider la vitre 8 lors de son mouvement selon la direction principale D.

Pour simplifier la description qui va suivre, la direction principale D est choisie parallèle à la direction verticale Z d'un repère associé au véhicule automobile 1, mais l'homme du métier saura comment adapter le dispositif de guidage de vitre selon l'invention pour autoriser d'autres directions de déplacement de la vitre.

Ce repère est défini par la direction verticale Z, une direction longitudinale Y parallèle à un axe longitudinal du véhicule automobile 1, et une direction transversale X parallèle à un axe transversale du véhicule automobile 1. Dans ce qui suit, les qualificatifs « d'extérieur » et « d'intérieur » sont utilisés pour qualifier la position relative selon la direction transversale X d'un élément à l'écart de la paroi de doublure 6 et à proximité de la paroi de doublure 6, respectivement. De manière similaire, les qualificatifs « d'avant » et « d'arrière» sont utilisés pour qualifier la position relative selon la direction longitudinale Y d'un élément par rapport à l'avant et à l'arrière du véhicule automobile 1. Les qualificatifs « de haut» et « de bas» sont utilisés pour qualifier la hauteur relative selon la direction verticale Z d'un élément.

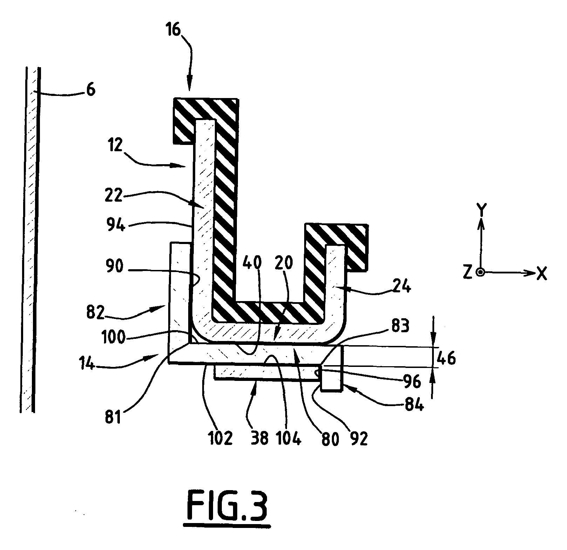

L'ensemble de guidage de vitre 4 selon l'invention comporte un cadre coulisse 12 soudé à la paroi de doublure 6 de manière à entourer la fenêtre 10 sur ses bords avant 26, arrière 30 et supérieur 28 ; un guide coulisse 14 emboîté à une extrémité arrière du cadre coulisse 12 et fixé sur la paroi de doublure 6 de manière à prolonger le guidage de la vitre 8 vers le bas de la portière 2 ; et une coulisse 16 (cf. figures 3 à 5) maintenue par le cadre coulisse 12 et le guide coulisse 14 et recevant les rebords de la vitre 8.

La coulisse 16, de section généralement en forme de « U », possède deux lèvres latérales aptes à venir en contact de la vitre 8. La coulisse 16 est réalisée dans une matière plastique permettant le glissement de la vitre 8 au cours de son déplacement, et formant un joint d'étanchéité au niveau de la partie de la périphérie de la vitre 8 engagée dans la coulisse. Ce joint d'étanchéité a pour fonction de limiter la quantité d'eau ruisselant à l'intérieur de la portière 2.

Le cadre coulisse 12 est un profilé métallique de section en « U ». En se référant à la figure 3, il comporte une âme 20 formant le fond du profilé, une rive intérieure 22 et une rive extérieure 24. La rive intérieure 22 possède une hauteur supérieure à celle de la rive extérieure 24.

La rive intérieure 22 est soudée en certains points à la paroi de doublure 6 de manière à encadrer partiellement la fenêtre 10. Plus précisément, le guide coulisse 12 est conformé pour être fixé à un bord avant 26, à un bord supérieur 28 et à un bord arrière 30 de la fenêtre 10.

Le cadre coulisse 12, continu, comprend une portion d'extrémité avant 32 rectiligne, disposée dans le prolongement du bord avant 26 de la fenêtre 10, et s'écartant de celle-ci vers le bas de la portière 2, parallèlement à la direction principale D. Le cadre coulisse 12 comprend également une portion d'extrémité arrière 34 rectiligne, située dans la prolongement du bord arrière 30 de la fenêtre 10, et s'écartant de celle-ci vers le bas de la portière 2, parallèlement à la direction principale D.

Du fait de la courbure de la paroi de doublure 6, en particulier de la partie basse de celle-ci, alors que le cadre coulisse 12 est fixé sur le bord arrière 30 de la fenêtre 10, la portion d'extrémité arrière 34 de celui-ci est située à l'écart de la paroi de doublure 6, comme cela est représenté sur la figure 3.

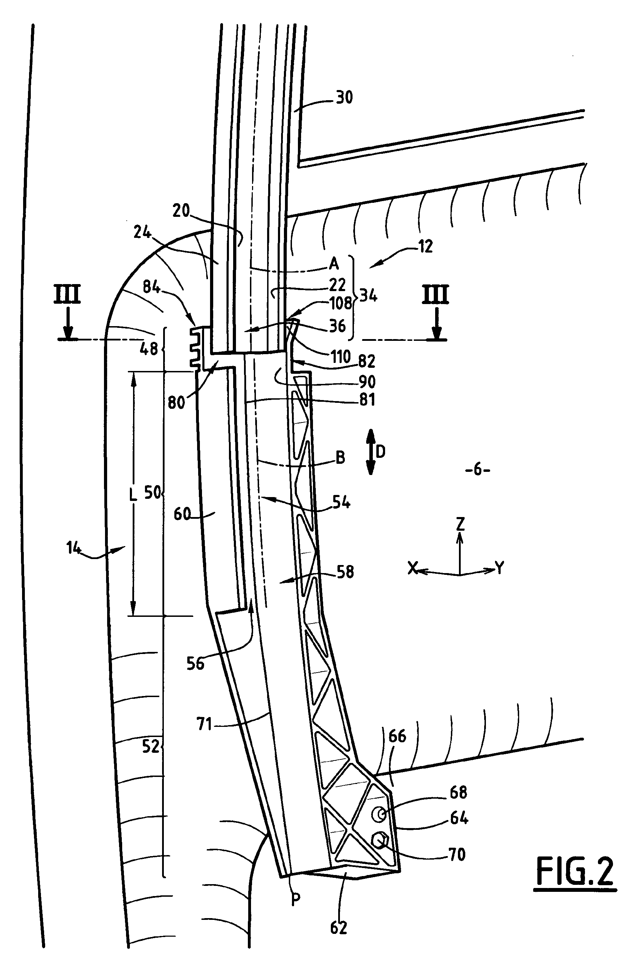

La portion d'extrémité arrière 34 du cadre coulisse 12, rendue visible à la figure 2, définit une première rainure 36 de maintien de la coulisse non représentée sur cette figure, dans la partie arrière de la portière. L'axe A de la première rainure 36 est parallèle à la direction principale D.

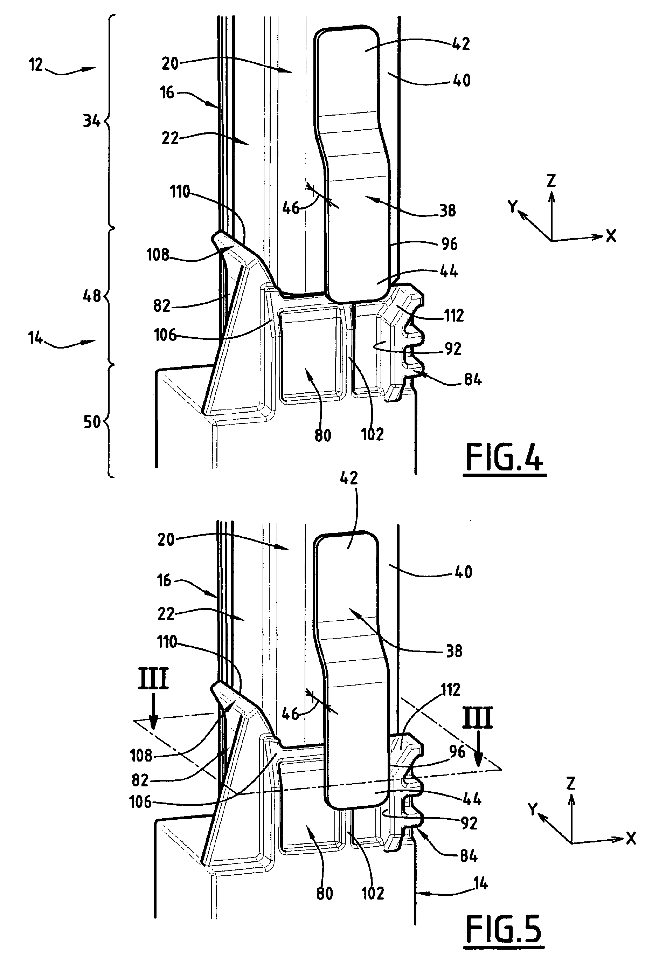

La portion d'extrémité arrière 34 du cadre coulisse 12 porte des moyens de liaison conjugués destinés à coopérer avec des moyens de liaison dont est muni le guide coulisse 14 pour emboîter ces deux pièces l'une avec l'autre, dans une position relative prédéfinie selon les directions transversale X et longitudinale Y. Dans le mode de réalisation décrit, l'emboîtement du cadre coulisse 12 et du guide coulisse 14 s'effectue par un déplacement selon la direction principale D. Pour cela, les moyens de liaison conjugués comportent une patte 38, comme cela est illustré sur les figures 4 et 5.

La patte 38 comporte une extrémité supérieure 42 soudée sur la face arrière 40 de l'âme 20 du cadre coulisse 12, et une extrémité inférieure 44 située à proximité de la terminaison inférieure de la portion d'extrémité arrière 34 du cadre coulisse 12, à l'écart de la face arrière 40 de l'âme 20 de celui-ci, de manière à ménager un intervalle 46. L'intervalle 46 est destiné à recevoir des moyens de liaison du guide coulisse 14 comme cela sera décrit plus en détail ci-dessous.

Le guide coulisse 14 est fixé d'une part à la portion d'extrémité arrière 34 du cadre coulisse 12 et d'autre part sur la paroi de doublure 6, dans la partie arrière de celle-ci. Il comporte une seconde rainure 54 d'axe B. La description qui va suivre est faite alors que le guide coulisse 14 est monté en position.

En se référant à la figure 2, le guide coulisse 14 comporte, dans sa longueur et de haut en bas selon la direction verticale Z, une portion supérieure 48 de liaison au cadre coulisse 12, une portion intermédiaire 50 de maintien de la coulisse 16, et une portion inférieure 52 formant une jambe de fixation du guide coulisse 14 sur la paroi de doublure 6.

La portion intermédiaire 50 du guide coulisse 14 est conformée pour définir la seconde rainure 54. La seconde rainure 54 a une longueur L selon son axe B et possède une section transversale en « U » qui reprend la section en « U » de la première rainure 36 du cadre coulisse 12. En position emboîtée du guide coulisse 14 et du cadre coulisse 12, l'axe B de la seconde rainure 54 coïncide avec l'axe A de la première rainure 36. Dans le mode de réalisation décrit en détail ici les axes A et B sont parallèles à la direction principale D.

La seconde rainure 54 sert de support de maintien d'une portion d'extrémité de la coulisse 16. La coulisse 16 peut ainsi être rallongée vers le bas de la portière 2 d'une longueur égale à la longueur L de la seconde rainure 54, de manière à augmenter d'autant la longueur de guidage du rebord arrière 9 de la vitre 8 et en particulier la longueur de guidage minimale lorsque la vitre 8 se trouve dans sa position basse.

La seconde rainure 54 comporte une paroi de fond 56, une paroi latérale intérieure 58, du côté de la paroi de doublure 6, et une paroi latérale extérieure 60, à l'écart de la paroi de doublure 6.

La paroi latérale intérieure 58 de la seconde rainure 54 se prolonge vers le bas du guide coulisse 14, au-delà de la portion intermédiaire 50, sur toute la longueur de la portion inférieure 52 de celui-ci. La paroi latérale intérieure 58 présente une certaine épaisseur selon la direction transversale X et possède une structure alvéolée composée de nervures de renfort, pour supporter et transférer les efforts que subit le guide coulisse 14 vers l'unique point de fixation du guide coulisse 14 sur la paroi de doublure 6. La paroi latérale intérieure 58 s'épaissit progressivement lorsque l'on se déplace du haut en bas du guide coulisse 14. Au niveau de la terminaison inférieure de la portion inférieure 52, la paroi latérale intérieure 58 se termine par une face d'extrémité horizontale 62 et une face d'extrémité verticale 64.

La face d'extrémité verticale 64, coplanaire au plan YZ, est destinée à venir en appui sur une zone de réception 66 de la paroi de doublure 6. La face d'extrémité verticale 64 comporte un moyen de positionnement prenant la forme d'un ergot de positionnement 68 faisant saillie selon la direction X vers la paroi de doublure 6, et apte à venir s'insérer dans un évidement de positionnement correspondant prévu sur la zone de réception 66. La face d'extrémité verticale 64 comporte également un orifice débouchant dans une alvéole de la paroi latérale intérieure 58 et destiné à être placé en vis à vis d'un orifice correspondant prévu sur la zone de réception 66 pour l'insertion d'un moyen de fixation, tel que la tige d'un goujon 70, pour fixer le guide coulisse 14 sur la paroi de doublure 6.

La paroi de fond 56 de la seconde rainure 54 se prolonge vers le bas du guide coulisse 14, au-delà de la portion intermédiaire 50, dans la portion inférieure 52 de celui-ci. Par contre, la paroi latérale extérieure 60 de la seconde rainure 54 est interrompue au niveau de la jonction entre les portions intermédiaire 50 et inférieure 52. Ainsi, dans la portion inférieure 52, la paroi de fond 56 fait saillie par rapport à la paroi latérale intérieure 58. La paroi de fond 56 est de forme triangulaire, c'est-à-dire que sa largeur, selon la direction transversale X, diminue progressivement du haut en bas de la portion inférieure 52, et rejoint la face d'extrémité horizontale 62 de la paroi latérale intérieure 58. Selon cet arrangement, la paroi de fond 56 et la paroi latérale intérieure 58 sont à angle droit et forment une rigole 71 permettant de conduire l'eau ruisselant hors de la coulisse 16 engagée dans la seconde rainure 54, vers un point d'écoulement P situé en dessous d'un moyen formant serrure de portière 72 (cf. figure 1) pour que l'eau n'altère pas le fonctionnement de celui-ci.

La portion supérieure 48 du guide coulisse 14 comporte des moyens de liaison coopérant avec les moyens de liaison conjugués dont est équipé le cadre coulisse 12 pour associer le cadre coulisse 12 et le guide coulisse 14 dans une position relative prédéterminée en X et en Y pour laquelle les axes A et B des premier et seconde rainures 36 et 54 sont alignés.

Dans le mode de réalisation décrit, le guide coulisse 14 est associé à la portion d'extrémité arrière 34 du cadre coulisse 12 par emboîtement par déplacement selon la direction principale D. La portion supérieure 48 du guide coulisse 14 présente des surfaces d'appui en X et en Y en tant que moyens de liaison respectivement en X et en Y, ainsi que des faces inclinées en X et en Y, et inclinées vers le guide coulisse 12 en tant que moyens d'aide à l'emboîtement respectivement en X et en Y.

La description des surfaces d'appui pour garantir un positionnement relatif en X et en Y précis du cadre coulisse 12 et du guide coulisse 14 va maintenant être faite en référence à la figure 3.

Comme indiqué plus haut, le cadre coulisse 12 possède une section en « U » et présente une rive intérieure 22, une rive extérieure 24 reliées par une âme 20.

La portion supérieure 48 du guide coulisse 14 comporte une paroi de liaison 80 qui possède, dans le plan de jonction parallèle au plan XY, un rebord intérieur 82 et un rebord extérieur 84.

La paroi de liaison 80 est située dans le prolongement de la paroi de fond 56 de la seconde rainure 54 du guide coulisse 14.

Le rebord intérieur 82 fait, dans le plan de jonction, saillie vers l'avant sur le côté intérieur de la paroi de liaison 80. Le rebord intérieur 82 est dans le prolongement de la paroi latérale intérieure 58 de la seconde rainure 54. La paroi de liaison 80 et le rebord intérieur 82 forment entre eux un coin 81 à angle droit destiné à recevoir une arête du cadre coulisse 12.

Le rebord extérieur 82 fait, dans le plan de jonction, saillie vers l'arrière sur le côté extérieur de la paroi de liaison 80. La paroi de liaison 80 et le rebord extérieur 84 forment un coin 83 à angle droit destiné à recevoir une arête de la patte 38 du cadre coulisse 12.

La surface extérieure 90 du rebord intérieur 82 constitue une première surface d'appui en X. La surface intérieure 92 du rebord extérieur 84 constitue une seconde surface d'appui en X. Les première et seconde surfaces d'appui en X permettent un positionnement précis du cadre coulisse 12 et du guide coulisse 14 selon la direction X. En effet, une face intérieure 94 de la rive intérieure 22 du cadre coulisse 12 vient en appui contre la surface extérieure 90 du rebord intérieur 82 du guide coulisse 14, tandis qu'un chant extérieur 96 de la patte 38 du cadre coulisse 12 vient en appui contre la surface intérieure 92 du rebord extérieur 84 du guide coulisse 14. Ainsi, le guide coulisse 14 est contraint en X par rapport au cadre coulisse 12.

Une surface avant 100 de la paroi de liaison 80 du guide coulisse 14 constitue une première surface d'appui en Y. Une surface arrière 102 de la paroi de liaison 80 constitue une seconde surface d'appui en Y. Les première et seconde surfaces d'appui en Y permettent un positionnement précis du cadre coulisse 12 et du guide coulisse 14 selon la direction Y. En effet, la face arrière 40 de l'âme 20 du cadre coulisse 12 vient en appui contre la surface avant 100 de la paroi de liaison 80 du guide coulisse 14, tandis qu'une face avant 104 de la patte 38 du cadre coulisse 12 vient en appui contre la surface arrière 102 de la paroi de liaison 80 du guide coulisse 14. La paroi de liaison 80 étant logée dans l'intervalle 46 séparant la patte 38 et l'âme 20 du cadre coulisse 12, le guide coulisse 14 est contraint en Y par rapport au cadre coulisse 12.

Pour amener le guide coulisse 14 et le cadre coulisse 12 dans cette position emboîtée, la portion supérieure 48 du guide coulisse 14 est munie de faces inclinées destinées à aider l'emboîtement par déplacement selon la direction principale D. La description suivante des faces inclinées est faite en relation avec les figures 4 et 5.

Ainsi, pour aider à l'emboîtement selon la direction longitudinale Y, la paroi de liaison 80 du guide coulisse 14 est biseautée de manière à présenter une face d'extrémité supérieure inclinée vers le haut et vers l'arrière (c'est-à-dire vers les Y négatifs) formant une rampe en Y 106.

Pour aider à l'emboîtement selon la direction X dans le sens des X positifs, le rebord intérieur 82 du guide coulisse 14 est prolongé par un avaloir 108 présentant une face opérationnelle inclinée formant une première rampe en X 110 tournée vers le haut et les X positifs, c'est-à-dire tournée à l'écart de la paroi de doublure 6. La première rampe en X 110 se raccorde à la surface extérieure 90 du rebord intérieur 82.

Pour aider à l'emboîtement selon la direction X dans le sens des X négatifs, le rebord extérieur 84 du guide coulisse 14 est biseauté pour présenter une face opérationnelle inclinée formant une seconde rampe en X 112, tournée vers le haut et vers les X négatifs, c'est-à-dire tournée vers la paroi de doublure 6. La seconde rampe en X 112 se raccorde avec la surface intérieure 92 du rebord extérieur 84.

Le procédé de montage de l'ensemble de guidage de vitre 4 selon l'invention va maintenant être décrit, principalement en référence aux figures 4 et 5.

Sur une chaîne de montage, le cadre coulisse 12 est d'abord soudé sur la paroi de doublure 6 de manière à encadrer partiellement la fenêtre 10. Le cadre coulisse 12 est ainsi fixé au moins au voisinage du bord arrière 30 de la fenêtre 10. Le cadre coulisse 12 est disposé de manière à ce que la première rainure 36 définit par sa portion d'extrémité arrière 34 soit placée dans le prolongement du bord arrière 30 de la fenêtre 10, en dessous de celle-ci, parallèlement à la direction principale D.

Puis le guide coulisse 14 est associé au cadre coulisse 12 en utilisant les moyens d'aide à l'emboîtement et les moyens de liaison. Plus précisément, le guide coulisse 14 est placé de sorte que sa seconde rainure 54 soit située grossièrement dans le prolongement et en dessous de la première rainure 36 du cadre coulisse 12. Le guide coulisse 14 est ensuite déplacé vers le haut selon la direction verticale Z.

D'abord, la rive intérieure 22 du guide coulisse 12 vient en contact de la première rampe en X 110 de l'avaloir 108, ce qui, lorsque le mouvement en Z se poursuit, force le déplacement vers l'intérieur (c'est-à-dire vers les X négatifs) du guide coulisse 14 par rapport au cadre coulisse 12 fixée sur la paroi de doublure 6.

Puis, la surface avant 100 de la paroi de liaison 80 du guide coulisse 14 vient en contact de la face arrière 40 de l'âme 20 du cadre coulisse 12.

En poursuivant le mouvement en Z vers le haut, la patte 38 est mise en butée contre la rampe en Y 106 de la paroi de liaison 80 du guide coulisse 14. En appliquant une force supplémentaire permettant de déformer légèrement la patte 38, l'extrémité inférieure 44 de la patte 38 franchit la rampe en Y 106. Alors, la paroi de liaison 80 du guide coulisse 14 pénètre dans l'intervalle 46 séparant la patte 38 de l'âme 20 du cadre coulisse 12. La surface arrière 102 de la paroi de liaison 80 prend appui sur la face avant 104 de la patte 38. A cause de sa déformation, la patte 38 génère une force permettant d'appuyer la face arrière 40 de l'âme 20 du cadre coulisse 12 sur la surface avant 100 de la paroi de liaison 80 du guide coulisse.

Sensiblement simultanément, le chant 96 de la patte 38 vient en contact de la seconde rampe en X 112 du guide coulisse 14. En appliquant une force supplémentaire, le chant extérieur 96 de la patte 38 franchit la seconde rampe en X 112 et vient en appui contre la face intérieur 92 du rebord extérieur 84. Le rebord extérieur 84 génère une contre réaction qui, les dimensionnements étant adaptés, applique la face intérieure 64 de rive intérieure 22 du cadre coulisse 12 contre la surface extérieure 90 du rebord intérieur 82 du guide coulisse 14.

A la fin de l'insertion, le guide coulisse 14 est positionné dans le plan XY sur le cadre coulisse 12 de manière à garantir que les première et seconde rainures 36 et 54 sont effectivement parfaitement alignées selon la direction principale D.

Puis, le guide coulisse 14 est fixé sur la paroi de doublure 6. Pour cela, l'opérateur loge l'ergot de positionnement 68 dans l'évidement de positionnement de la paroi de doublure 6 et insère le goujon 70 à travers l'orifice du guide coulisse 14 et l'orifice correspondant de la paroi de doublure 6. Un écrou, vissé sur la tige du goujon 70, permet de fixer le guide coulisse 14 sur la paroi de doublure 6. Alors, la position relative selon la direction verticale Z du guide coulisse 14 et du cadre coulisse 12 est déterminée.

L'opérateur chausse la coulisse 16 à l'intérieure des première et seconde rainures 36 et 54. La portion d'extrémité de la coulisse 16 est placée dans la seconde rainure 54 sur toute la longueur L de celle-ci. Les première et seconde rainures 36 et 54 étant parfaitement alignées entre elles, la coulisse 16 n'est pas déformée et la piste de guidage du rebord arrière 9 de la vitre 8 est continue et rectiligne.

Finalement, l'opérateur monte la vitre 8 dans l'ensemble de guidage de vitre 4 en engageant le bord arrière 9 de la vitre 8 dans la coulisse 16, selon un mouvement de rotation autour d'un axe sensiblement parallèle à l'axe X, rendu possible par la forme triangulaire de la paroi de fond 56 de la paroi inférieure 52 du guide coulisse 14.

On notera que l'ensemble de guidage de vitre selon l'invention forme une arche entre deux points de fixation sur la paroi de doublure 6. En un point haut de fixation, le cadre coulisse 12 est fixé au voisinage du bord arrière 30 de la fenêtre 10 et, en un point bas de fixation, le cadre coulisse 14 est fixé sur une zone d'appui 66 de la partie basse de la paroi de doublure. Avantageusement, une telle configuration permet de disposer, sur la paroi de doublure 6, entre celle-ci et l'ensemble de guidage de vitre, des équipements qui peuvent par exemple être un raidisseur de paroi de doublure, des moyens d'actionnement de la serrure 77, etc.

L'alignement entre les première et seconde rainures étant correct par construction, la coulisse n'est pas déformée au niveau du passage d'une rainure à l'autre. En conséquence, le dispositif d'anti-pincement n'est pas déclenché de manière intempestive.

Le montage du guide coulisse de l'ensemble de guidage de vitre selon l'invention est simple. En particulier, l'opérateur n'a plus qu'une unique opération de vissage à exécuter. Ceci participe à l'amélioration des cadences le long de la chaîne de montage et donc à la diminution des coûts de fabrication.

En variante, l'ensemble de guidage de vitre comporte, emboîté à la portion d'extrémité avant 32 du cadre coulisse 12, un guide coulisse similaire à celui qui vient d'être décrit.

Les première et seconde rainures ont été décrites comme étant rectilignes dans ce qui précède afin de simplifier la description. Mais, l'homme du métier comprendra que les première et seconde rainures peuvent présenter une certaine courbure par exemple adaptée à la courbure du rebord de la vitre à guider ou au mouvement que doit suivre le rebord de la vitre. Alors, pour que la coulisse ne soit pas déformée lors du franchissement de l'intervalle entre les première et seconde rainures, il faut que l'emboîtement du guide coulisse sur le cadre coulisse garantisse que les première et seconde rainures se raccordent mutuellement de manière tangente. La direction principale D correspond alors à cette direction tangente au niveau du plan de jonction du guide coulisse et du cadre coulisse.

Enfin, l'emboîtement décrit ci-dessus peut se faire par déplacement selon une autre direction que la direction principale.

## Revendications

1. Ensemble de guidage de vitre (4) destiné à équiper une portière (2) d'un véhicule automobile (1) pour guider le mouvement d'une vitre (8) pouvant être déplacée, selon une direction principale (D) sensiblement verticale, entre une position basse d'ouverture d'une fenêtre (10) de la portière et une position haute de fermeture de la fenêtre, du type comportant :
- un cadre coulisse (12) comportant une première rainure (36) et destiné à être fixé à une paroi de doublure (6) de la portière, au voisinage d'au moins un bord latérale (30) de la fenêtre, de sorte que la première rainure soit disposée parallèlement à la direction principale ; et,
- un guide coulisse (14) comportant une seconde rainure (54) et destiné à être fixé sur la paroi de doublure, de sorte qu'en position montée du cadre coulisse et du guide coulisse sur la paroi de doublure, la seconde rainure soit disposée parallèlement à la direction principale, en dessous et dans le prolongement de la première rainure du cadre coulisse ; et,
- une coulisse (16), chaussée dans lesdites première et seconde rainures et définissant une piste de guidage d'un rebord latéral (9) de la vitre,
**caractérisé en ce que** le guide coulisse est muni de moyens de liaison (80, 82, 84) et le cadre coulisse est muni de moyens de liaison conjugués (20, 22, 38), les moyens de liaison et les moyens de liaison conjugués coopérant entre eux pour emboîter le guide coulisse et le cadre coulisse dans une position relative qui est prédéterminée, au moins dans un plan de jonction transverse à la direction principale, de manière à garantir l'alignement des première et seconde rainures entre elles.

2. Ensemble de guidage de vitre selon la revendication 1, **caractérisé en ce que** l'une des deux portions d'extrémité (48) du guide coulisse (14) selon la direction principale (D) porte lesdits moyens de liaison (80, 82, 84), et **en ce que** l'autre portion d'extrémité (52) du guide coulisse forme une jambe de fixation du guide coulisse sur la paroi de doublure (6).

3. Ensemble de guidage de vitre selon la revendication 1 ou la revendication 2, **caractérisé en ce que** les moyens de liaison (80, 82, 84) et de liaison conjugués (20, 22, 38) permettent un emboîtement du cadre coulisse (12) et du guide coulisse (14) par déplacement du guide coulisse vers le cadre coulisse selon la direction principale (D).

4. Ensemble de guidage de vitre selon la revendication 3, **caractérisé en ce que** le cadre coulisse (12) est un profilé en « U » qui comporte une âme (20) reliant des première et une seconde rives (22, 24), et dont une portion d'extrémité arrière (34) définit intérieurement ladite première rainure (36), **en ce que** les moyens de liaison conjugués du cadre coulisse comportent une patte (38) fixée sur l'âme, **en ce que** les moyens de liaison du guide coulisse (14) comportent une paroi de liaison (80) située dans le prolongement, selon la direction principale (D) et vers le cadre coulisse, d'une paroi de fond (56) de ladite seconde rainure (54), la paroi de liaison étant dimensionnée pour venir s'insérer dans un intervalle (46) défini entre la patte et l'âme du cadre coulisse, de manière à contraindre le cadre coulisse selon une première direction (Y) dans le plan de jonction.

5. Ensemble de guidage de vitre selon la revendication 4, **caractérisé en ce que** la paroi de liaison (80) du guide coulisse (14) comporte des premier et second rebords latéraux (82, 84) faisant, dans le plan de jonction, saillie hors de la paroi de liaison selon ladite première direction (Y), lesdits premier et second rebords étant espacés l'un de l'autre de manière à contraindre le cadre coulisse (12) selon une seconde direction (X) dans le plan de jonction, la seconde direction étant orthogonale à la première direction.

6. Ensemble de guidage de vitre selon la revendication 5, **caractérisé en ce que** le premier rebord (82) de la paroi de liaison (80) du guide coulisse (14) fait, dans le plan de jonction, saillie selon un premier sens de la première direction (Y) et définie une surface d'appui (90) de la première rive (22) du cadre coulisse (12), et **en ce que** le second rebord (84) de la paroi de liaison (80) du guide coulisse (14) fait, dans le plan de jonction, saillie dans un second sens de la première direction (X), opposé au premier sens, et définie une surface d'appui (92) d'un chant (96) de la patte (38) du cadre coulisse (12).

7. Ensemble de guidage de vitre selon l'une quelconque des revendications 3 à 6, **caractérisé en ce qu'**au moins l'un parmi le cadre coulisse (12) et le guide coulisse (14) est muni de moyens d'aide à l'emboîtement (106, 110, 112).

8. Ensemble de guidage de vitre selon la revendication 7, **caractérisé en ce que** les moyens d'aide à l'emboîtement selon la première direction (Y) comportent au moins une face inclinée (106) ménagée sur la paroi de liaison (80) et se raccordant à une surface d'appui arrière (102).

9. Ensemble de guidage de vitre selon la revendication 7 ou la revendication 8, **caractérisé en ce que** les moyens d'aide à l'emboîtement selon la seconde direction (X) comportent une première face inclinée (110) portée par le premier rebord (82) et se raccordant à la première surface d'appui (90), et une seconde face inclinée (112) portée par le second rebord (84) et se raccordant à la seconde surface d'appui (92).

10. Ensemble de guidage de vitre selon l'une quelconque des revendications précédentes, **caractérisé en ce que** le guide coulisse (14) est muni d'une rigole (71) située dans le prolongement de la seconde rainure (54) et en dessous de celle-ci, pour permettre d'évacuer de l'eau ruisselant de la coulisse (16) vers un point bas (P) de la portière (2).

11. Portière de véhicule automobile comportant un ensemble de guidage de vitre, **caractérisée en ce que** ledit ensemble de guidage de vitre est un ensemble de guidage de vitre (4) selon l'une quelconque des revendications 1 à 10.

12. Procédé de montage d'un ensemble de guidage de vitre selon l'une quelconque des revendications 1 à 10 sur une paroi de doublure (6) d'une portière (2) d'un véhicule automobile (1) pour guider le mouvement, selon une direction principale (D) sensiblement verticale, d'une vitre (8) apte à être déplacée entre une position basse d'ouverture d'une fenêtre de la portière et une position haute de fermeture de la fenêtre, **caractérisé en ce qu'**il comporte les étapes consistant à:
- fixer un cadre coulisse (12) comportant une première rainure (36) sur une paroi de doublure (6) de la portière, au voisinage d'au moins un bord latéral (30) d'une fenêtre (10) de la portière, de sorte que ladite première rainure soit disposée parallèlement à la direction principale ;
- approcher du cadre coulisse un guide coulisse (14) comportant une seconde rainure (54) de manière à placer ladite seconde rainure parallèle à la direction principale, en dessous de ladite première rainure le long de la direction principale ;
- déplacer le guide coulisse le long de la direction principale pour emboîter des moyens de liaison (80, 82, 84) disposés sur la guide coulisse et des moyens de liaison conjugués (20,22, 38) disposés sur le cadre coulisse, et placer le guide coulisse et le cadre coulisse dans une position relative prédéterminée au moins dans un plan de jonction transverse à la direction principale ;
- fixer le guide coulisse à la paroi de doublure ;
- chausser une coulisse (16) dans les première et seconde rainures ; et,
- monter une vitre (8) dans ladite coulisse.

## Claims

1. Windowpane guidance assembly (4), adapted to equip a door (2) of a motor vehicle (1), for guiding the movement of a windowpane (8) which can be displaced, in a substantially vertical main direction (D), between a low position for opening a window (10) of the door and a high position for closing the window, of the type comprising:
- a slide frame (12) comprising a first groove (36) and adapted to be fixed to a lining wall (6) of the door, in the vicinity of at least one lateral edge (30) of the window, in such a way that the first groove is arranged parallel to the main direction; and
- a slide guide (14) comprising a second groove (54) and adapted to be fixed to the lining wall, in such a way that when the slide frame and the slide guide are in the mounted position on the lining wall, the second groove is arranged parallel to the main direction, below and in the extension of the first groove of the slide frame; and
- a slide (16) fitted in said first and second grooves and defining a guidance track for a lateral rim (9) of the windowpane,
**characterised in that** the slide guide is provided with connecting means (80, 82, 84) and the slide frame is provided with mating connecting means (20, 22, 38), the connecting means and the mating connecting means cooperating with one another to fit the slide guide and the slide frame together in a relative position, which is predetermined, at least in a joining plane transverse to the main direction, in such a way as to ensure that the first and second grooves are mutually aligned.

2. Windowpane guidance assembly according to claim 1, **characterised in that** one of the two end portions (48) of the slide guide (14) in the main direction (D) carries said connecting means (80, 82, 84), and **in that** the other end portion (52) of the slide guide forms a limb for fixing the slide guide on the lining wall (6).

3. Windowpane guidance assembly according to either claim 1 or claim 2, **characterised in that** the connecting means (80, 82, 84) and mating connecting means (20, 22, 38) make it possible to fit the slide frame (12) and the slide guide (14) together by displacing the slide guide towards the slide frame in the main direction (D).

4. Windowpane guidance assembly according to claim 3, **characterised in that** the slide frame (12) is a U-profile, which comprises a web (20) connecting first and second rails (22, 24) and of which a rear end portion (34) internally defines said first groove (36), **in that** the mating connecting means of the slide frame comprise a tab (38) fixed to the web, **in that** the connecting means of the slide guide (14) comprise a connecting wall (80) located in the extension, in the main direction (D) and towards the slide frame, of a base wall (56) of said second groove (54), the connecting wall being sized for insertion into a gap (46) defined between the tab and the web of the slide frame, in such a way as to constrain the slide frame in a first direction (Y) in the joining plane.

5. Windowpane guidance assembly according to claim 4, **characterised in that** the connecting wall (80) of the slide guide (14) comprises first and second lateral rims (82, 84), projecting, in the joining plane, beyond the connecting wall in said first direction (Y), said first and second rims being spaced apart from one another so as to constrain the slide frame (12) in a second direction (X) in the joining plane, the second direction being orthogonal to the first direction.

6. Windowpane guidance assembly according to claim 5, **characterised in that** the first rim (82) of the connecting wall (80) of the slide guide (14) projects, in the joining plane, in a first sense of the first direction (Y) and defines a contact surface (90) of the first rail (22) of the slide frame (12), and **in that** the second rim (84) of the connecting wall (80) of the slide guide (14) projects, in the joining plane, in a second sense of the first direction (X), counter to the first sense, and defines a contact surface (92) of a slide edge (96) of the tab (38) of the slide frame (12).

7. Windowpane guidance assembly according to any one of claims 3 to 6, **characterised in that** at least one of the slide frame (12) and the slide guide (14) is provided with means (106, 110, 112) for assisting fitting.

8. Windowpane guidance assembly according to claim 7, **characterised in that** the means for assisting fitting in the first direction (Y) comprise at least one inclined face (106) formed on the connecting wall (80) and connected to a rear contact surface (102).

9. Windowpane guidance assembly according to either claim 7 or claim 8, **characterised in that** the means for assisting fitting in the second direction (X) comprise a first inclined face (110), carried by the first rim (82) and connected to the first contact surface (90), and a second inclined face (112), carried by the second rim (84) and connected to the second contact surface (92).

10. Windowpane guidance assembly according to any one of the preceding claims, **characterised in that** the slide guide (14) is provided with a gutter (71), located in the extension of and below the second groove (54), for evacuating water flowing from the slide (16) towards a low point (P) of the door (2).

11. Motor vehicle door comprising a windowpane guidance assembly, **characterised in that** said windowpane guidance assembly is a windowpane guidance assembly (4) according to any one of claims 1 to 10.

12. Method for mounting a windowpane guidance assembly according to any one of claims 1 to 10 on a lining wall (6) of a door (2) of a motor vehicle (1), for guiding the movement, in a substantially vertical main direction (D), of a windowpane (8) which can be displaced between a low position for opening a window of the door and a high position for closing the window, **characterised in that** it comprises the steps of:
- fixing a slide frame (12) comprising a first groove (36) to a lining wall (6) of the door, in the vicinity of at least one lateral edge (30) of a window (10) of the door, in such a way that said first groove is arranged parallel to the main direction;
- bringing a slide guide (14) comprising a second groove (54) towards the slide frame, in such a way as to place said second groove parallel to the main direction, below said first groove along the main direction;
- displacing the slide guide along the main direction so as to fit together connecting means (80, 82, 84), arranged on the slide guide, and mating connecting means (20, 22, 38), arranged on the slide frame, and to place the slide guide and the slide frame in a relative position, which is predetermined, at least in a joining plane transverse to the main direction;
- fixing the slide guide to the lining wall;
- fitting a slide (16) in the first and second grooves; and
- mounting a windowpane (8) in said slide.

## Patentansprüche

1. Scheibenführungsanordnung (4) zur Ausstattung einer Tür (2) eines Kraftfahrzeugs (1), um die Bewegung einer Scheibe (8) zu führen, die, in einer im Wesentlichen vertikalen Hauptrichtung (D), zwischen einer unteren Öffnungsstellung eines Fensters (10) der Tür und einer oberen Schließstellung des Fensters verschiebbar ist, vom Typ aufweisend:
- einen Schieberahmen (12), der eine erste Nut (36) aufweist und zur Befestigung an einer Verkleidungswand (6) der Tür, in der Nähe zumindest eines seitlichen Rands (30) des Fensters, bestimmt ist, derart, dass die erste Nut parallel zu der Hauptrichtung angeordnet ist; und
- eine Schiebeführung (14), die eine zweite Nut (54) aufweist und zur Befestigung an der Verkleidungswand bestimmt ist, derart, dass die zweite Nut in der montierten Stellung des Schieberahmens und der Schiebeführung an der Verkleidungswand parallel zu der Hauptrichtung unterhalb und in der Verlängerung der ersten Nut des Schieberahmens angeordnet ist; und
- eine Gleitschiene (16), die in der ersten und zweiten Nut sitzt und eine Führungsbahn für einen seitlichen Vorsprung (9) der Scheibe festlegt, **dadurch gekennzeichnet, dass** die Schiebeführung mit Verbindungsmitteln (80, 82, 84) versehen ist und der Schieberahmen mit Gegenverbindungsmitteln (20, 22, 38) versehen ist, wobei die Verbindungsmittel und die Gegenverbindungsmittel miteinander zusammenwirken, um die Schiebeführung und den Schieberahmen in einer relativen Stellung in Eingriff zu bringen, die, zumindest in einer Fügeebene quer zu der Hauptrichtung, vorbestimmt festgelegt ist, derart, dass die Fluchtung der ersten und der zweiten Nut zueinander sichergestellt ist.

2. Scheibenführungsanordnung nach Anspruch 1, **dadurch gekennzeichnet, dass** der eine der beiden Endabschnitte (48) der Schiebeführung (14) in der Hauptrichtung (D) die Verbindungsmittel (80, 82, 84) trägt und dass der andere Endabschnitt (52) der Schiebeführung einen Schenkel für die Befestigung der Schiebeführung an der Verkleidungswand (6) bildet.

3. Scheibenführungsanordnung nach Anspruch 1 oder Anspruch 2, **dadurch gekennzeichnet, dass** die Verbindungsmittel (80, 82, 84) und die Gegenverbindungsmittel (20, 22, 38) einen Eingriff des Schieberahmens (12) und der Schiebeführung (14) durch Verschiebung der Schiebeführung in Richtung des Schieberahmens in der Hauptrichtung (D) ermöglichen.

4. Scheibenführungsanordnung nach Anspruch 3, **dadurch gekennzeichnet, dass** der Schieberahmen (12) ein U-förmiges Profil ist, das einen Steg (20) aufweist, der einen ersten und einen zweiten Rand (22, 24) verbindet und wobei ein hinterer Endabschnitt (34) des Stegs an der Innenseite die Nut (36) festlegt, dass die Gegenverbindungsmittel des Schieberahmens eine Lasche (38) aufweisen, die an dem Steg befestigt ist, dass die Verbindungsmittel der Schiebeführung (14) eine Verbindungswand (80) aufweisen, die sich, in der Hauptrichtung (D) und in Richtung des Schieberahmens, in der Verlängerung einer Bodenwand (56) der zweiten Nut (54) befindet, wobei die Verbindungswand derart dimensioniert ist, dass sie in einen Zwischenraum (46), der zwischen der Lasche und dem Steg des Schieberahmens festgelegt ist, eintreten kann, derart, dass sie den Schieberahmen in einer ersten Richtung (Y) in der Fügeebene spannt.

5. Scheibenführungsanordnung nach Anspruch 4, **dadurch gekennzeichnet, dass** die Verbindungswand (80) der Schiebeführung (14) erste und zweite seitliche Vorsprünge (82, 84) aufweist, die, in der Fügeebene, in der ersten Richtung (Y) über die Verbindungswand vorspringen, wobei die ersten und zweiten Vorsprünge voneinander derart beabstandet sind, dass sie den Schieberahmen (12) in einer zweiten Richtung (X) in der Fügeebene spannen, wobei die zweite Richtung orthogonal zu der ersten Richtung ist.

6. Scheibenführungsanordnung nach Anspruch 5, **dadurch gekennzeichnet, dass** der erste Vorsprung (82) der Verbindungswand (80) der Schiebeführung (14), in der Fügeebene, in einen ersten Sinn der ersten Richtung (Y) vorspringt und eine Abstützfläche (90) für den ersten Rand (22) des Schieberahmens (12) festlegt, und dass der zweite Vorsprung (84) der Verbindungswand (80) der Schiebeführung (14), in der Fügeebene, in einem zweiten, dem ersten Sinn entgegengesetzten Sinn der ersten Richtung (X) vorspringt und eine Abstützfläche (92) für eine Kante (96) der Lasche (38) des Schieberahmens (12) festlegt.

7. Scheibenführungsanordnung nach einem der Ansprüche 3 bis 6, **dadurch gekennzeichnet, dass** der Schieberahmen (12) und/oder die Schiebeführung (14) mit Mitteln zur Eingriffsunterstützung (106, 110, 112) versehen ist.

8. Scheibenführungsanordnung nach Anspruch 7, **dadurch gekennzeichnet, dass** die Mittel zur Eingriffsunterstützung in der ersten Richtung (Y) zumindest eine geneigte Fläche (106) aufweisen, die an der Verbindungswand (80) vorgesehen ist und sich an eine hintere Abstützfläche (102) anschließt.

9. Scheibenführungsanordnung nach Anspruch 7 oder Anspruch 8, **dadurch gekennzeichnet, dass** die Mittel zur Eingriffsunterstützung in der zweiten Richtung (X) eine erste geneigte Fläche (110), die von dem ersten Vorsprung (82) getragen wird und sich an die erste Abstützfläche (90) anschließt, und eine zweite geneigte Fläche (112), die von dem zweiten Vorsprung (84) getragen wird und sich an die zweite Abstützfläche (92) anschließt, aufweisen.

10. Scheibenführungsanordnung nach einem der vorhergehenden Ansprüche, **dadurch gekennzeichnet, dass** die Schiebeführung (14) mit einer Rinne (71) versehen ist, die sich in der Verlängerung der zweiten Nut (54) und unterhalb dieser befindet, um den Ablauf von Oberflächenwasser von der Gleitschiene (16) in Richtung eines unteren Punkts (P) der Tür (2) zu ermöglichen.

11. Tür für Kraftfahrzeug mit einer Scheibenführungsanordnung, **dadurch gekennzeichnet, dass** die Scheibenführungsanordnung eine Scheibenführungsanordnung (4) nach einem der Ansprüche 1 bis 10 ist.

12. Verfahren zur Montage einer Scheibenführungsanordnung nach einem der Ansprüche 1 bis 10 an einer Verkleidungswand (6) einer Tür (2) eines Kraftfahrzeugs (1), um die Bewegung einer Scheibe (8), die zwischen einer unteren Öffnungsstellung eines Fensters der Tür und einer oberen Schließstellung des Fensters verschiebbar ist, in einer im Wesentlichen vertikalen Hauptrichtung (D) zu führen, **dadurch gekennzeichnet, dass** es die folgenden Schritte aufweist, die darin bestehen:
- einen Schieberahmen (12), der eine erste Nut (36) aufweist, an einer Verkleidungswand (6) der Tür, in der Nähe zumindest eines seitlichen Rands (30) eines Fensters (10) der Tür, zu befestigen, derart, dass die erste Nut parallel zu der Hauptrichtung angeordnet ist;
- an den Schieberahmen eine Schiebeführung (14), die eine zweite Nut (54) aufweist, derart heranzuführen, dass die zweite Nut parallel zu der Hauptrichtung unterhalb der ersten Nut entlang der Hauptrichtung angeordnet ist;
- die Schiebeführung entlang der Hauptrichtung zu verschieben, um Verbindungsmittel (80, 82, 84), die an der Schiebeführung angeordnet sind, und Gegenverbindungsmittel (20, 22, 38), die an dem Schieberahmen angeordnet sind, in Eingriff zu bringen und die Schiebeführung und den Schieberahmen in eine relative Stellung zu bringen, die zumindest in einer Fügeebene quer zu der Hauptrichtung vorbestimmt ist;
- die Schiebeführung an der Verkleidungswand zu befestigen;
- eine Gleitschiene (16) in die erste und zweite Nut einzusetzen und
- eine Scheibe (8) in der Gleitschiene zu montieren.
